# EUROPEAN PATENT APPLICATION

(11) **EP 1 936 578 A2**
(43) Date of publication of application: **25.06.2008**
(21) Application number: 07121298.9
(22) Date of filing: 22.11.2007
(51) Int. Cl.: G08C 17/00

(54) **Terminal apparatus, electronic apparatus and multi-byte character code transmission system**

(30) Priority: 20.12.2006 JP 2006343142
(71) Applicant: Kabushiki Kaisha Toshiba, Minato-ku, Tokyo 105-8001 (JP)
(72) Inventor: Shimbayashi, Mitsuru, Tokyo 105-8001 (JP)
(74) Representative: Henkel, Feiler & Hänzel

(57) **Abstract**

A terminal apparatus includes an input unit (205) configured to input a character, a remote-control code transmission unit (103) configured to transmit a remote-control code to an electronic apparatus, and a remote-control code conversion unit (301) configured to convert a multi-byte character code, which is composed of a plurality of numerical values and corresponds to the character that is input by the input unit (205), to a plurality of remote-control codes corresponding to the plurality of numerical values, and to successively output the plurality of remote-control codes to the remote-control code transmission unit (103), in order to transmit the multi-byte character code corresponding to the character input by the input unit (205) to the electronic apparatus via the remote-control code transmission unit (103).

## Description

The present invention relates to a terminal apparatus which is capable of transmitting a remote-control code, an electronic apparatus which is capable of receiving a remote-control code, and a multi-byte character code transmission system for transmitting a multi-byte character code.

In recent years, various kinds of electronic apparatuses, such as audio/video (AV) equipment, have been developed. Most of these electronic apparatuses are equipped with an interface for receiving remote-control codes which are sent from a remote-control unit (also called "remote controller"). Thus, simply by operating the remote-control unit, the user can easily remote-control the electronic apparatus.

In addition, recently, a terminal apparatus, such as a mobile phone, has begun to be equipped with an interface for transmitting a remote-control code to an external apparatus by means of an infrared signal or the like.

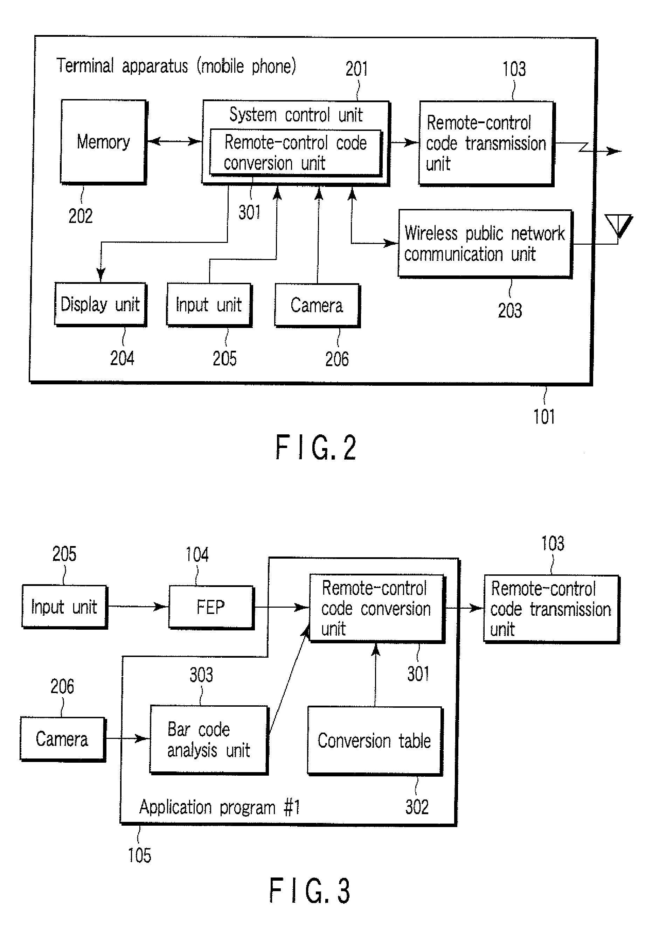

Jpn. PCT National Publication No. 2004-537877 discloses an electronic apparatus which functions as a mobile phone, a portable information terminal, etc. This electronic apparatus includes a mobile phone module and an infrared module for remote control (paragraph [0022], FIG. 3).

In general, in an electronic apparatus such as an AV apparatus, an input device such as a keyboard is not provided. Thus, the user has to input various data, which are to be sent to the electronic apparatus, by only the operation of the remote-control unit.

However, in usual cases, the number of kinds of usable remote-control codes is several tens at most, and the number of keys, which can be disposed on the remote-control unit, is limited. On the other hand, the number of kinds of multi-byte characters, such as Japanese full-size 2-byte characters (Japanese Kana characters and Chinese characters), is tens of thousands. This being the case, the remote-control unit is not suitable for input of a character string including multi-byte characters.

A terminal apparatus, such as a mobile phone or a personal digital assistant (PDA), includes an input unit having a high-performance input function for character. Under the circumstances, it is necessary to realize a novel function which can transmit a character string including a multi-byte character, which has been input by operating the input unit of the terminal apparatus, such as a mobile phone or a PDA, to the electronic apparatus from the terminal apparatus.

However, in order to realize this function, if use is made of a method of newly equipping the terminal apparatus and the electronic apparatus with purpose-specific communication devices for transmitting the character string including the multi-byte character, a great increase in cost would occur in both the terminal apparatus and the electronic apparatus. Therefore, it is necessary to realize the function which can transmit the multi-byte character, without newly providing the purpose-specific communication device.

The object of the present invention is to provide a terminal apparatus, an electronic apparatus, a multi-byte character code transmission system and a multi-byte character code transmission method, which can perform transmission of multi-byte characters without newly providing a purpose-specific communication device.

According to an aspect of the present invention, there is provided a terminal apparatus comprising: an input unit configured to input a character; a remote-control code transmission unit configured to transmit a remote-control code to an electronic apparatus; and a remote-control code conversion unit configured to convert a multi-byte character code, which is composed of a plurality of numerical values and corresponds to the character that is input by the input unit, to a plurality of remote-control codes corresponding to the plurality of numerical values, and to successively output the plurality of remote-control codes to the remote-control code transmission unit, in order to transmit the multi-byte character code corresponding to the character input by the input unit to the electronic apparatus via the remote-control code transmission unit.

According to another aspect of the present invention, there is provided an electronic apparatus comprising: a remote-control code reception unit configured to receive a plurality of remote-control codes, which are successively transmitted from a terminal apparatus, the plurality of remote-control codes corresponding to a plurality of numerical values which constitute a multi-byte character code; a remote-control code process unit configured to perform a character code reconstruction process of reconstructing the multi-byte character code by combining a plurality of numerical values corresponding to the plurality of remote-control codes received by the remote-control code reception unit; and a character process unit configured to process, as a character, the multi-byte character code reconstructed by the remote-control code process unit.

According to still another aspect of the present invention, there is provided a multi-byte character code transmission system comprising: a transmission apparatus configured to be capable of transmitting a remote-control code, including: a remote-control code conversion unit configured to convert a multi-byte character code, which is composed of a plurality of numerical values, to a plurality of remote-control codes corresponding to the plurality of numerical values; and a remote-control code transmission unit configured to successively transmit to outside the plurality of remote-control codes which are output from the remote-control code conversion unit; and a reception apparatus configured to be capable of receiving a remote-control code, including: a remote-control code reception unit configured to receive the plurality of remote-control codes, which are transmitted from the transmission apparatus; a remote-control code process unit configured to perform a character code reconstruction process of reconstructing the multi-byte character code by combining a plurality of numerical values corresponding to the plurality of remote-control codes received by the remote-control code reception unit; and a character process unit configured to process, as a character, the multi-byte character code reconstructed by the remote-control code process unit.

The invention can be more fully understood from the following detailed description when taken in conjunction with the accompanying drawings, in which:
FIG. 1 is a block diagram showing an example of the system configuration of a multi-byte character code transmission system according to an embodiment of the present invention;
FIG. 2 is a block diagram showing an example of the structure of a terminal apparatus which is used in the system shown in FIG. 1;
FIG. 3 is a block diagram showing the functional configuration of the terminal apparatus shown in FIG. 2;
FIG. 4 is a block diagram showing an example of the structure of an electronic apparatus which is used in the system shown in FIG. 1;
FIG. 5 is a block diagram showing the functional configuration of the electronic apparatus shown in FIG. 4;
FIG. 6 shows an example of arrangement of remote-control buttons which are provided on a remote-control unit that remote-controls the electronic apparatus shown in FIG. 4;
FIG. 7 shows an example of remote-control codes corresponding to the remote-control buttons shown in FIG. 6;
FIG. 8 is a flow chart illustrating the procedure of a process of transmitting a character string (multi-byte character codes) via a remote-control interface, which is executed by the terminal apparatus shown in FIG. 2;
FIG. 9 shows an example of a conversion table for use in a remote-control code conversion process, which is executed by the terminal apparatus shown in FIG. 2;
FIG. 10 shows an example of a start control code and an end control code, which are sent from the terminal apparatus shown in FIG. 2;
FIG. 11 shows a relationship between a multi-byte character code and a plurality of remote-control codes which are obtained by the terminal apparatus shown in FIG. 2;
FIG. 12 shows a relationship between a character string and a remote-control code string which is obtained by the terminal apparatus shown in FIG. 2;
FIG. 13 is a flow chart illustrating the procedure of a remote-control code reception process which is executed by the electronic apparatus shown in FIG. 4;
   and
FIG. 14 illustrates an example of a remote-control code conversion process which is executed by the terminal apparatus shown in FIG. 2.

An embodiment of the present invention will now be described with reference to the accompanying drawings.

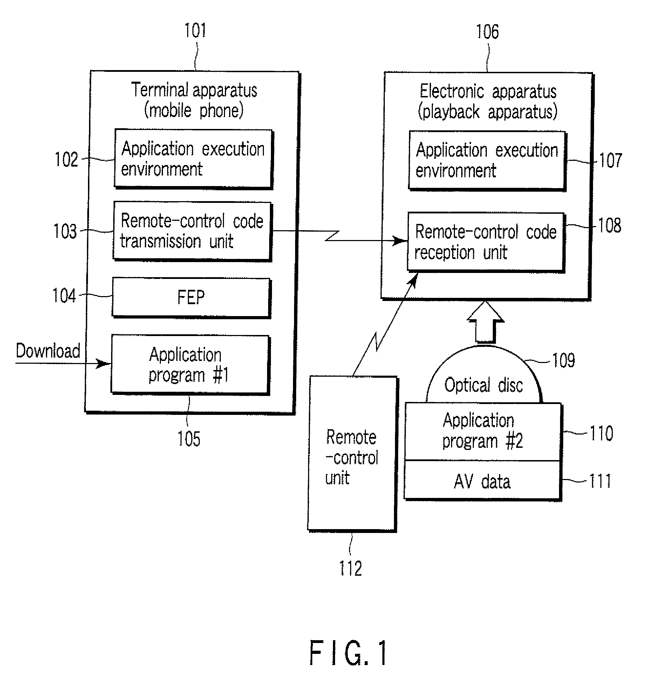

FIG. 1 shows an example of the system configuration of a multi-byte character code transmission system according to an embodiment of the present invention. This multi-byte character code transmission system is a system which transmits multi-byte character codes by using conventional remote-control code interfaces which are provided both on a transmission apparatus side and a reception apparatus side. In this multi-byte character code transmission system, each of characters (multi-byte character codes) in a character string, which is an object of transmission, is expressed by a plurality of remote-control codes. The plural remote-control codes are transmitted, as an encoded multi-byte character code, from the transmission apparatus side to the reception apparatus side.

The multi-byte character code transmission system includes a terminal apparatus 101 and an electronic apparatus 106. The terminal apparatus 101 functions as a transmission apparatus which transmits the multi-byte character code by remote-control codes. The electronic apparatus 106 functions as a reception apparatus which receives the multi-byte character code that is transmitted from the terminal apparatus 101 by the remote-control codes.

The terminal apparatus 101 is composed of, for example, a portable device (portable information terminal) such as a mobile phone or a PDA. The electronic apparatus 106 is composed of, for example, a playback apparatus such as an HD DVD (High Definition Digital Versatile Disc) player, or a TV receiver.

In the description below, it is assumed that the terminal apparatus 101 is realized by a mobile phone including a remote-control interface, and the electronic apparatus 106 is realized by a playback apparatus including a remote-control interface.

In order to function as the above-described transmission apparatus, the terminal apparatus (mobile phone) 101 includes, for example, an application execution environment 102, a remote-control code transmission unit 103, a front-end processor (FEP) 104 and a first application program 105.

The application execution environment 102 is software which provides an operational environment that is necessary for the execution of the first application program 105. The first application program 105 is executed on the application execution environment 102. The remote-control code transmission unit 103 is a remote-control interface provided on the main body of the terminal apparatus (mobile phone) 101, and is configured to transmit remote-control codes for remote-controlling an external electronic apparatus (electronic apparatus 106 in this embodiment) to the external electronic apparatus. The remote-control code transmission unit 103 transmits the remote-control codes by, e.g. a wireless signal to the electronic apparatus 106. The remote-control code transmission unit 103 is composed of, for example, an infrared communication module, and infrared, for instance, is used for the above-mentioned wireless signal.

The front-end processor (FEP) 104 has a function of assisting the input of a character string including multi-byte character codes such as full-size 2-byte characters of Japanese language (e.g., Japanese Kana characters and Chinese characters). The multi-byte character code is a character code having a data size of 2 bytes or more.

The first application program 105 is a program for transmitting the remote-control codes for remote-controlling the electronic apparatus 106 to the electronic apparatus 106 via the remote-control code transmission unit 103. The first application program 105 also has a function for transmitting to the electronic apparatus 106 the character string including the multi-byte characters, which is input by the user's operation of the input unit including keys, the input unit being provided on the main body of the terminal apparatus (mobile phone) 101. The first application program 105 can be downloaded from, for example, a site on the Internet and installed in the terminal apparatus 101.

In usual cases, the number of kinds of usable remote-control codes is less than the number of kinds of characters which are expressed by multi-byte character codes. For example, the number of kinds of 2-byte characters, which are expressed by 2-byte character codes, is tens of thousands. On other hand, in usual cases, the number of kinds of remote-control codes, which can be interpreted by the electronic apparatus 106, is ten-odd to several tens.

Thus, in the present embodiment, the first application program 105 encodes one multi-byte character code, which is an object of transmission, by using a combination of plural remote-control codes. Specifically, the first application program 105 converts a plurality of numerical values, which constitute one multi-byte character code that is to be transmitted, to a plurality of remote-control codes corresponding to these numerical values, respectively. Then, the first application program 105 successively outputs the plural remote-control codes to the remote-control transmission unit 103 as remote-control codes to be transmitted.

For example, the first application program 105 decomposes multi-byte-length data, which constitutes one multi-byte character code to be transmitted, into a plurality of partial data, and converts each of the plural partial data to a remote-control code corresponding to a numerical value indicated by the partial data. Thereby, a plurality of remote-control codes, which correspond to the plurality of numerical values constituting the multi-byte character code, are obtained.

For example, if the multi-byte character code to be transmitted is a character code expressed by a hexadecimal code, the multi-byte character code is composed of a plurality of numerical values (numerical values of plural digits). In this case, each numeral value (each digit) is expressed by a hexadecimal number. The first application program 105 decomposes the multi-byte character code, which is the object of transmission, into a plurality of numerical values expressed by hexadecimal numbers, and converts the plural numerical values expressed by hexadecimal numbers to a plurality of remote-control codes indicating to these plural numerical values.

The remote-control code transmission unit 103 successively transmits the plural remote-control codes, which are output from the first application program 105, to the electronic apparatus 106.

As described above, by encoding the multi-byte character code with use of the combination of plural remote-control codes, the multi-byte character code can be transmitted from the terminal apparatus 101 to the electronic apparatus 106 via the remote-control code transmission unit 103. Thereby, the character string including one or more multi-byte character codes can easily be transmitted from the terminal device 101 to the electronic device 106 via conventional remote-control interfaces, without newly providing purpose-specific communication devices on the terminal apparatus 101 and electronic apparatus 106. In addition, the user can easily input the character string including one or more multi-byte character codes, which is to be sent to the electronic apparatus 106, simply by the user operating the input unit of the mobile phone that is familiar to the user.

The electronic apparatus 106 has a function of playing back digital content, such as audio/video (AV) data, which is stored on an optical disc 109 such as HD DVD media. In addition, in order to function as the above-described reception apparatus, the electronic apparatus 106 includes, for example, an application execution environment 107, a remote-control code reception unit 108 and a second application program 110. The second application program 110, for example, is stored on the optical disc 109 together with AV data 111, and is loaded from the optical disc 109 into the electronic apparatus 106.

The application execution environment 107 is software which provides an operational environment that is necessary for the execution of the second application program 110. The second application program 110 is executed on the application execution environment 107. The remote-control code reception unit 108 is a remote-control interface provided on the main body of the electronic apparatus 106, and receives remote-control codes, which are transmitted by a wireless signal such as an infrared signal, from the terminal apparatus 101 or from a remote-control unit (also referred to as "remote controller") 112. When a multi-byte character code is transmitted, the remote-control code reception unit 108 receives a plurality of remote-control codes corresponding to a plurality of numerical values that constitute each multi-byte character code, the remote-control codes being successively transmitted from the terminal apparatus 101. The remote-control unit 112 is a remote-control unit for remote-controlling the AV playback function of the electronic apparatus 106.

The second application program 110 executes a remote-control code processing function for processing the remote-control codes that are received by the remote-control code reception unit 108. This remote-control code processing function includes a function of executing a process that is assigned to a remote-control code received by the remote-control reception unit 108, and a function of executing a character code reconstruction process for reconstructing a multi-byte character code from a plurality of remote-control codes which are successively transmitted from the terminal apparatus 101. The second application program 110 combines a plurality of numerical values corresponding to the plural remote-control codes received by the remote-control code reception unit 108, thereby reconstructing the multi-byte character code. Specifically, the second application program 110 converts the respective plural remote-control codes, which are received by the remote-control code reception unit 108, to numeral values, and combines the plural numerical values which are obtained by the conversion and correspond to the plural remote-control codes, thereby reconstructing the multi-byte character code. By the character code reconstruction function, the character string including the multi-byte character code can be input to the electronic apparatus 106, without equipping the electronic apparatus 106 with a purpose-specific communication device for receiving the character string including the multi-byte character code.

The second application program 110 also has a character processing function of processing the reconstructed multi-byte character code as a character. The character processing function is a function for handling the character string that is transmitted by the remote-control codes from the terminal apparatus 101. For example, the character processing function executes a process of transmitting a character string of, e.g. a commodity name or a user name, which is transmitted by remote-control codes from the terminal apparatus, to a server on a network, or a process of storing the character string in a memory device in the electronic apparatus 106.

Next, referring to FIG. 2, an example of the system configuration of the terminal apparatus (mobile phone) 101 is described.

The terminal apparatus 101 includes, in addition to the above-described remote-control code transmission unit 103, a system control unit 201, a memory 202, a wireless public network communication unit 203, a display unit 204, an input unit 205 for inputting characters, and a camera 206.

The system control unit 201 is a processor (CPU) which controls the operation of the terminal apparatus 101. The system control unit 201 controls communication with a mobile phone network, which is executed via the wireless public network communication unit 203. In addition, by executing the above-described first application program 105 stored in the memory 202, the system control unit 201 controls, for instance, a process of transmitting remote-control codes to the external apparatus, which is executed via the remote-control code transmission unit 103. A remote-control code conversion unit 301 is provided in the system control unit 201. The remote-control code conversion unit 301 executes a process of converting each character (multi-byte character) in a character string, which is input by the user's operation of the input unit 205, to a plurality of remote-control codes. Specifically, the remote-control code conversion unit 301 converts a plurality of numerical values, which compose the multi-byte character code corresponding to the character input from the input unit 205 via the FEP 104, to a plurality of remote-control codes corresponding to these numerical values, respectively, and successively outputs the plural remote-control codes to the remote-control transmission unit 103 as remote-control codes to be transmitted.

The memory 202 is used as a working area of the system control unit 201. The memory 202 stores various programs which are executed by the system control unit 201, and various data. The display unit 204 displays various information which is necessary for the user to operate the terminal apparatus 101. The wireless public network communication unit 203 executes wireless communication with the mobile phone network via a base station.

The input unit 205 is an input device composed of various button switches (keys) for operating the terminal apparatus 101. The input unit 205 cooperates with the FEP 104 and inputs characters to the system control unit 201. The camera 206 is an imaging device for inputting an image of a subject.

Next, referring to FIG. 3, the functional configuration of the first application program 105 is described.

The first application program 105 includes, as its function execution modules, a conversion table 302 and a bar code analysis unit 303, in addition to the above-described remote-control code conversion unit 301.

The conversion table 302 stores conversion information indicative of a relationship between remote-control codes, which are recognizable by the electronic apparatus 106, and numerical values assigned to the remote-control codes. The remote-control code conversion unit 301 decomposes each multi-byte character code, which corresponds to each character in the character string that is input from the input unit 205 via the FEP 104, to a plurality of numerical values, and converts, with reference to the conversion table 302, each numerical value to a remote-control code which is recognizable by the electronic apparatus 106. Specifically, the remote-control code conversion unit 301 decomposes multi-byte-length data of the multi-byte character code into a plurality of partial data, and determines a plurality of remote-control codes which are to represent the multi-byte character code, in accordance with a plurality of numerical values indicated by the plural partial data.

The bar code analysis unit 303 analyzes a two-dimensional bar code, such as a QR code, which is photographed by the camera 206, and generates a multi-byte character code. The multi-byte character code obtained by the bar code analysis unit 303 is also sent to the remote-control code conversion unit 301 as a multi-byte character code that is to be transmitted to the electronic apparatus 106.

The remote-control code conversion unit 301 and the bar code analysis unit 303 may also be realized by dedicated software.

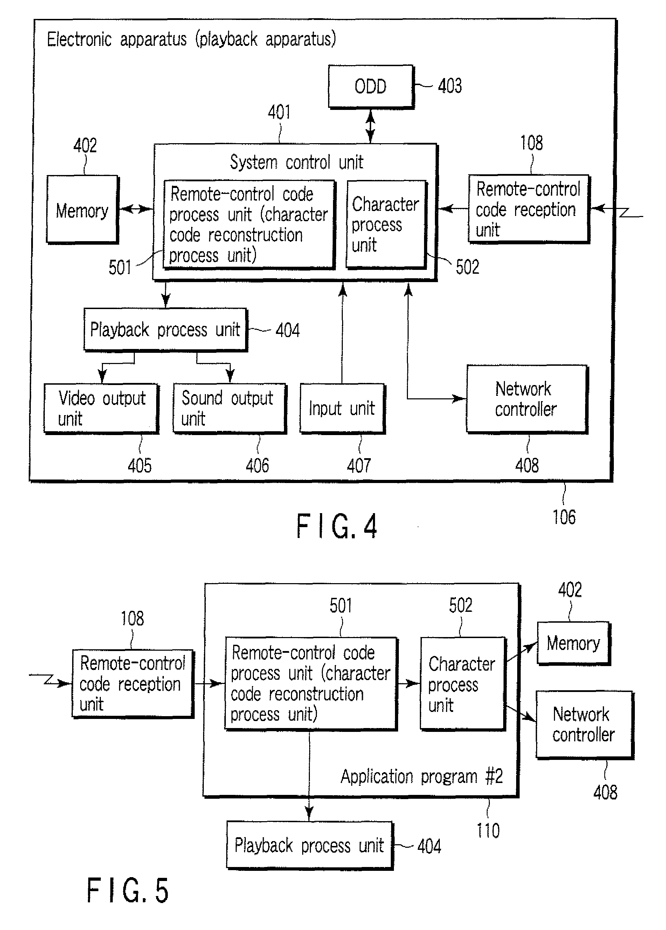

Next, referring to FIG. 4, an example of the system configuration of the electronic apparatus (playback apparatus) 106 is described.

The electronic apparatus 106 includes, in addition to the above-described remote-control code reception unit 108, a system control unit 401, a memory 402, an optical disc drive (ODD) 403, a playback process unit 404, a video output unit 405, a sound (audio) output unit 406, an input unit 407 and a network controller 408.

The system control unit 401 is a processor (CPU) which controls the operation of the electronic apparatus 106, and executes a process of playing back AV content that is read out of optical disc media via the optical disc drive (ODD) 403. In addition, the system control unit 401 reconstructs each character code which is transmitted from the terminal apparatus 101 with use of a plurality of remote-control codes, by executing the above-described second application program 110 that is loaded in the memory 402 from, e.g. optical disc media. A remote-control code process unit 501 and a character process unit 502 are provided in the system control unit 401. The remote-control code process unit 501 is a character code reconstruction process unit which executes a character code reconstruction process for reconstructing a multi-byte character code by combining a plurality of numerical values corresponding to a plurality of remote-control codes which are received by the remote-control reception unit 108. The character process unit 502 processes, as a character, the multi-byte character code which is reconstructed by the remote-control code process unit 501.

The memory 402 is used as a working area of the system control unit 401. The memory 402 stores various programs which are executed by the system control unit 401, and various data.

The playback process unit 404 cooperates with the system control unit 401 to execute a playback process for playing back AV content. In the playback process, for instance, a process of analyzing AV content and a process of decoding video data and audio data, which are included in the AV content, are executed. The video output unit 405 outputs the video data, which is decoded by the playback process unit 404, to an external apparatus such as a TV receiver. The sound output unit 405 outputs the audio data, which is decoded by the playback process unit 404, to an external apparatus such as a TV receiver.

The input unit 407 is composed of various button switches (keys) for controlling a playback operation, etc. of the electronic apparatus 106. The network controller 408 connects the electronic apparatus 106 to a network, and executes communication with devices on the network.

Next, referring to FIG. 5, the functional configuration of the second application program 110 is described.

The second application program 110 includes, as its function execution modules, the above-described remote-control code process unit 501 and character string process unit 502.

The remote-control process unit 501 determines whether a remote-control code, which is received by the remote-control code reception unit 108, is a control code which designates a character input mode. If the received remote-control code is the control code, the remote-control code process unit 501 executes the above-described character code reconstruction process for remote-control codes which are transmitted, following the control code, from the terminal apparatus 101. On the other hand, if the received remote-control code is not the control code, the remote-control code process unit 501 executes a process assigned to the received remote-control code, for instance, a process for controlling the playback process operation by the playback process unit 404.

The character process unit 502 executes a process of generating a character corresponding to each multi-byte character code, which is reconstructed in the character code reconstruction process by the remote-control code process unit 501, and a process of storing the generated character in the memory 402, or a process of transmitting the generated character to, for example, a server on the Internet via the network controller 408.

The remote-control code process unit 501 and the character string process unit 502 may also be realized by dedicated software.

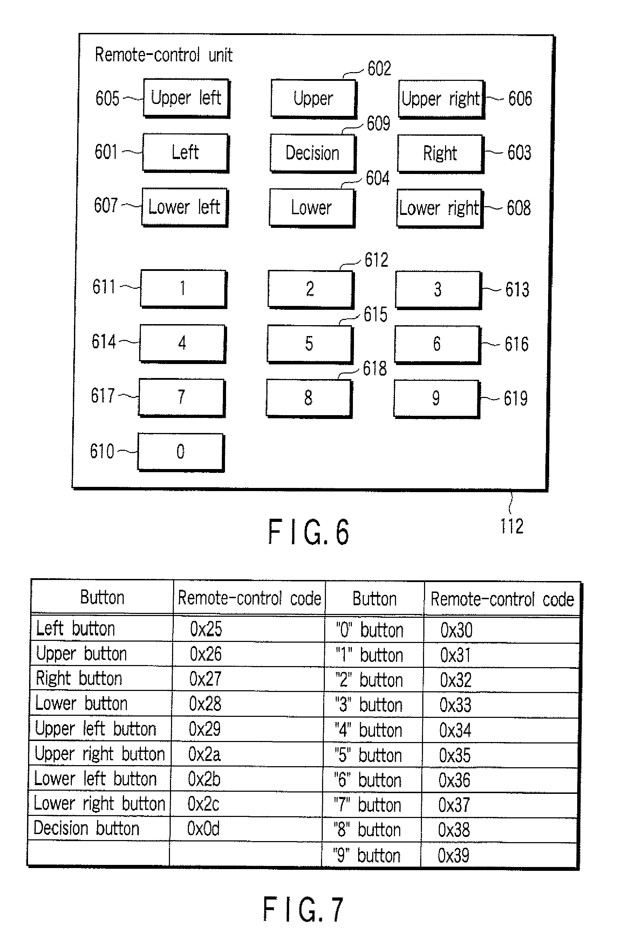

FIG. 6 schematically shows an arrangement of remote-control buttons which are provided on the remote-control unit 112 that remote-controls the electronic apparatus 106.

On the main body of the remote-control unit 112, there are provided a left button 601, an upper button 602, a right button 603, a lower button 604, an upper left button 605, an upper right button 606, a lower left button 607, a lower right button 608, a decision button 609, a "0" button 610, a "1" button 611, a "2" button 612, a "3" button 613, a "4" button 614, a "5" button 615, a "6" button 616, a "7" button 617, an "8" button 618, and a "9" button 619. FIG. 7 shows an example of correspondency between the respective buttons of the remote-control unit 112 and remote-control codes for remote-controlling the electronic apparatus 106, which correspond to these buttons.

Each remote-control code is composed of, e.g. 1 byte and, as shown in FIG. 7, "0x25", "0x26", "0x27", "0x28", "0x29", "0x2a "0x2b", "0x2c" and "0x0d" are assigned to the left button 601, upper button 602, right button 603, lower button 604, upper left button 605, upper right button 606, lower left button 607, lower right button 608 and decision button 609. Symbol "0x" indicates a hexadecimal form. In addition, "0x30", "0x31", "0x32", "0x33", "0x34", "0x35", "0x36", "0x37", "0x38" and "0x39" are assigned to the "0" button 610, "1" button 611, "2" button 612, "3" button 613, "4" button 614, "5" button 615, "6" button 616, "7" button 617, "8" button 618 and "9" button 619.

The remote-control code transmission unit 103 of the terminal apparatus 101 is capable of transmitting the above remote-control codes. The electronic apparatus 106 is capable of receiving and processing the above remote-control codes.

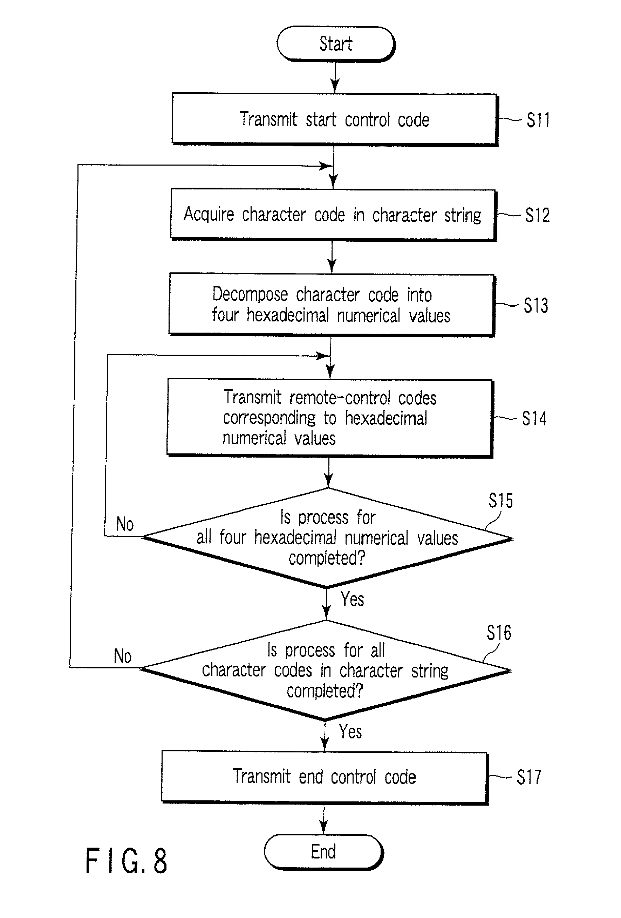

Next, referring to a flow chart of FIG. 8, a description is given of the procedure of a process of transmitting a character string (multi-byte character codes), which is input from the input unit 205 via the FEP 104, to the electronic apparatus 106 from the terminal apparatus 101 via the remote-control interface.

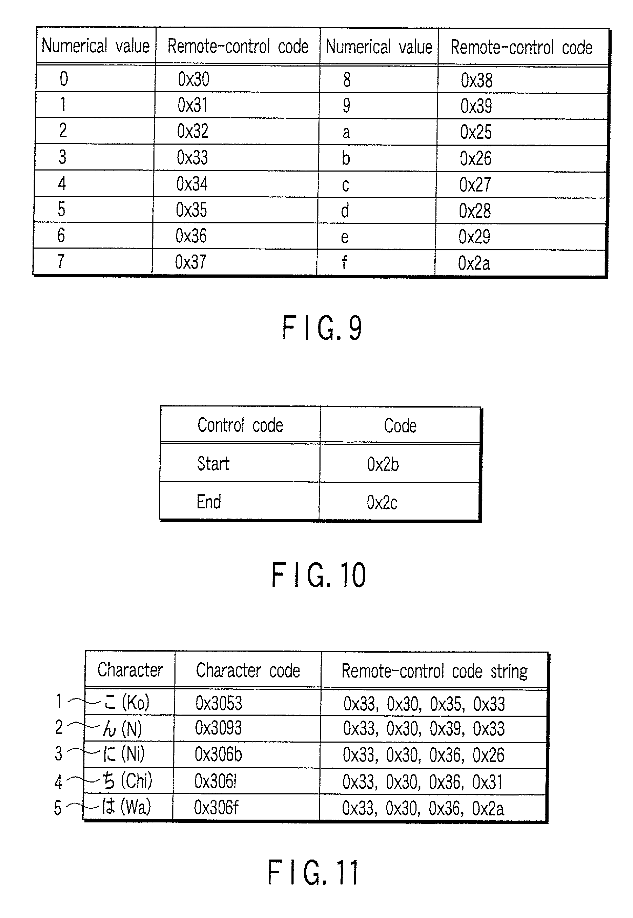

To start with, the system control unit 201 of the terminal apparatus 101 transmits to the electronic apparatus 106 via the remote-control code transmission unit 103 a control code (start control code) which instructs the start of a character input mode for transmitting a multi-byte character code by using remote-control codes (step S11). For example, as shown in FIG. 10, a remote-control code "0x2b" is used as the start control code.

The system control unit 201 executes the following process for characters (multi-byte characters) which constitute a character string that is an object of transmission, which is input by the user's operation of the input unit 205. For example, in the case of transmitting a character string comprising five Japanese characters indicated by reference numerals 1, 2, 3, 4 and 5 in FIG. 11, the process of steps S12 to S16 is repeated five times. In FIG. 11, the letter or letters parenthesized after each of the Japanese characters (Japanese "hiragana" characters) indicated by reference numerals 1, 2, 3, 4 and 5 represent the pronunciation of the corresponding Japanese character.

To begin with, the system control unit 201 acquires a character code (multi-byte character code) of a first character in the character string that is the object of transmission, by using the remote-control code conversion unit 301 (step S12). In the description below, it is assumed that each multi-byte character code is a 2-byte character code that is expressed by a hexadecimal code. The 2-byte character code is expressed by, e.g. UTF16BE. "BE" in "UTF16BE" indicates that the arrangement of 2-byte-length data of the 2-byte character code is a Big Endean format. For example, if the first character is the Japanese character indicated by reference numeral 1 in FIG. 11, a character code "0x3053" is acquired.

Using the remote-control code conversion unit 301, the system control unit 201 decomposes the acquired multi-byte character code (2-byte character code) into four numerical values expressed by hexadecimal numbers (i.e. 4-digit numerical values expressed by hexadecimal numbers) (step S13). For example, the character code "0x3053" of the character indicated by reference numeral 1 in FIG. 11 is decomposed into four (4-digit) hexadecimal numerical values of 0x3, 0x0, 0x5 and 0x3. The hexadecimal numerical value of each digit is composed of four bits. Thus, the decomposing process executed in step S13 is, in other words, a process of decomposing 2-byte data, which constitutes the 2-byte character code, into four partial data each having 4-bit length.

Subsequently, using the remote-control code conversion unit 301, the system control unit 201 generates four remote-control codes corresponding to the four hexadecimal numerical values that are acquired by the decomposition, and successively transmits the generated four remote-control codes to the electronic apparatus 106 via the remote-control transmission unit 103 (step S14). In step S14, the remote-control code conversion unit 301 converts the four hexadecimal numerical values, which are acquired by the decomposition, to four remote-control codes that are indicative of the four hexadecimal numerical values, respectively. In other words, the remote-control code conversion unit 301 converts the four partial data to four remote-control codes that are indicative of the four partial data, respectively. The remote-control code conversion unit 301 successively outputs the four remote-control codes, which are obtained by the conversion, to the remote-control code transmission unit 103 as to-be-transmitted data. FIG. 9 shows a table indicating the correspondency between 1-digit hexadecimal numerical values and remote-control codes. The table shown in FIG. 9 is used as the conversion table 302 which has been described with reference to FIG. 3. For example, the four numerical values, 0x3, 0x0, 0x5 and 0x3, which constitute the character code 0x3053 that is indicative of the character designated by reference numeral 1 in FIG. 11, are converted to four remote-control codes 0x33, 0x30, 0x35 and 0x33. In addition, the four numerical values, 0x3, 0x0, 0x9 and 0x3, which constitute the character code 0x3093 that is indicative of the character designated by reference numeral 2 in FIG. 11, are converted to four remote-control codes 0x33, 0x30, 0x39 and 0x33. The four numerical values, 0x3, 0x0, 0x6 and 0xb, which constitute the character code 0x306b that is indicative of the character designated by reference numeral 3 in FIG. 11, are converted to four remote-control codes 0x33, 0x30, 0x36 and 0x26. The four numerical values, 0x3, 0x0, 0x6 and 0x1, which constitute the character code 0x3061 that is indicative of the character designated by reference numeral 4 in FIG. 11, are converted to four remote-control codes 0x33, 0x30, 0x36 and 0x31. The four numerical values, 0x3, 0x0, 0x6 and 0xf, which constitute the character code 0x306f that is indicative of the character designated by reference numeral 5 in FIG. 11, are converted to four remote-control codes 0x33, 0x30, 0x36 and 0x2a.

The process of step S14 is repeated until the process for all the four hexadecimal numerical values obtained by the decomposition is completed (step S15).

If the process for all the four hexadecimal numerical values, which constitute the first character, is completed, the system control unit 201 executes the process of steps S12 to S15 for the second character in the character string to be transmitted.

If the process of steps S12 to S15 for all the characters in the character string to be transmitted is completed (YES in step S16), the system control unit 201 transmits a control code (end control code) indicative of the completion (end) of the character input mode to the electronic apparatus 106 via the remote-control code transmission unit 103 (step S17). For example, as shown in FIG. 10, a remote-control code "0x2c" is used as the end control code.

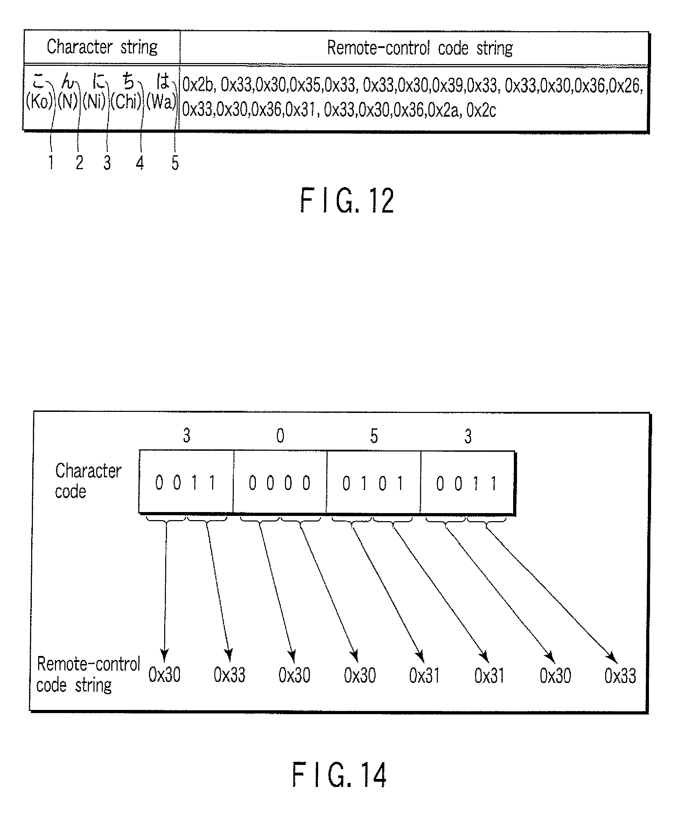

FIG. 12 shows a string of all remote-control codes to which control codes are added, the string being output from the terminal apparatus 101 when the five characters indicated by reference numerals 1 to 5 in FIG. 12 are transmitted according to the flow chart of FIG. 8.

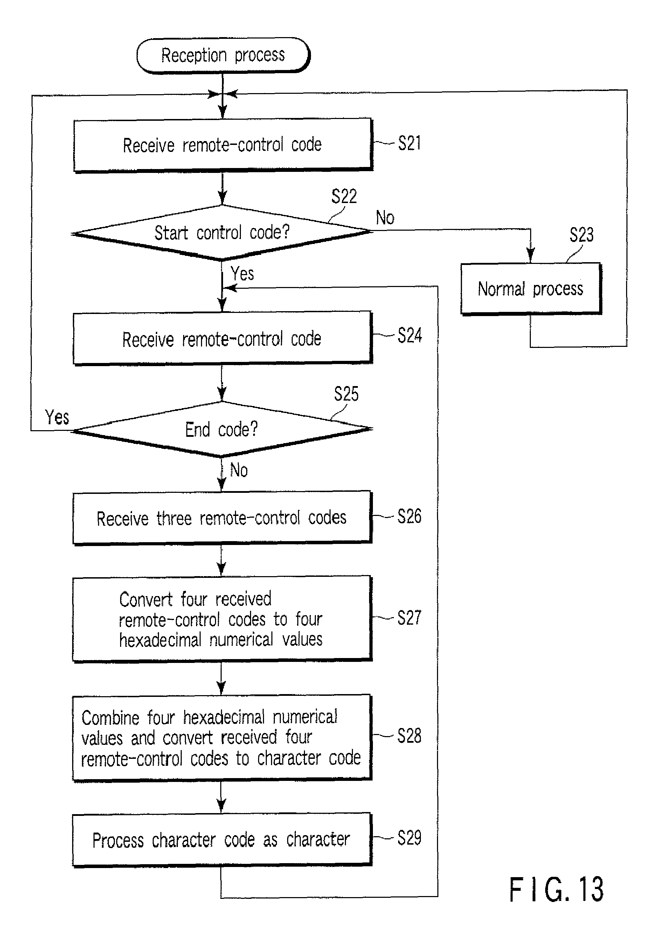

Next, referring to a flow chart of FIG. 13, the procedure of the remote-control code reception process, which is executed by the electronic apparatus 106, is described.

The remote-control code process unit 501 of the system control unit 401 has a first remote-control code input mode for executing a normal remote-control code process, and a second remote-control code input mode for executing character string input. In the flow chart of FIG. 13, steps S21, S22 and S23 represent a normal remote-control code process sequence, and steps S24, S25, S26, S27, S28 and S29 represent a process sequence for character string input.

If the remote-control code reception unit 108 receives a remote-control code (step S21), the remote-control code process unit 501 determines whether the remote-control code received by the remote-control code reception unit 108 is the above-described start control code or not (step S22).

If the remote-control code received by the remote-control code reception unit 108 is not the above-described start control code (NO in step S22), the remote-control code process unit 501 executes a process (normal process) that is assigned in advance to the received remote-control code (step S23).

On the other hand, if the remote-control code received by the remote-control code reception unit 108 is the above-described start control code (YES in step S22), the remote-control code process unit 501 transitions to the second remote-control code input mode, and receives a next remote-control code via the remote-control code reception unit 108, which is transmitted from the terminal apparatus 101 (step S24) . Then, the remote-control code process unit 501 determines whether the remote-control code which is received in step S24 is the above-described end control code or not (step S25).

If the remote-control code which is received in step S24 is the above-described end control code (YES in step S25), the remote-control code process unit 501 transitions to the first remote-control code input mode, and advances to step S21 that is the first step of the normal remote-control code process sequence.

On the other hand, if the remote-control code which is received in step S24 is not the above-described end control code (NO in step S25), the remote-control code process unit 501 successively receives three remote-control codes via the remote-control code reception unit 108, which are transmitted from the terminal apparatus 101 (step S26). Subsequently, the remote-control code process unit 501 converts each of the four remote-control codes in total, which are received in steps S24 and S26, to four hexadecimal numerical values (step S27). Then, the remote-control code process unit 501 combines the four hexadecimal numerical values obtained in step S27, to convert the four received remote-control codes to one multi-byte character code (2-byte character code of UTF16BE) (step S28). In step S28, the remote-control code process unit 501 regards the four hexadecimal numerical values as being hexadecimal numerical values of the four digits of a multi-byte character code (2-byte character code of UTF16BE) that is expressed by a hexadecimal code, and reconstructs one multi-byte character code (2-byte character code of UTF16BE). The character process unit 502 processes the reconstructed multi-byte character code as a character that is input by the user (step S29). In step 529, the character process unit 502 executes a process of storing the reconstructed multi-byte character code as a character that designates some object or as a part of a character string that designates some object, or a process of transmitting the reconstructed multi-byte character code to the server on the network. In step S29, the character process unit 502 also executes, where necessary, a process of converting the reconstructed multi-byte character code of UTF16BE to a character code which can be processed by the application execution environment 107.

The sequence of step S24 and steps S26 to S29, that is, the process of receiving the four remote-control codes and reconstructing the multi-byte character code from the four remote-control codes, is repeatedly executed until the end control code is received. Thus, the character string can be reconstructed from the remote-control code string indicative of the character string. The remote-control code string begins with the start control code and ends with the end control code.

As described above, in the present embodiment, on the terminal apparatus 101 side, each multi-byte character code is converted to a combination of a plurality of remote-control codes. On the electronic apparatus 106 side, the multi-byte character code is reconstructed from the plurality of remote-control codes. Thus, tens of thousands of kinds of multi-byte characters can be transmitted via a conventional remote-control interface by only ten-odd to several tens of kinds of remote-control codes. Without newly providing a dedicated communication device, multi-byte characters can be transmitted. The user can easily input a multi-byte-length character string, which is typified by Japanese full-size 2-byte characters, to an electronic apparatus such as a playback apparatus, only by the user operating the input unit of a terminal apparatus, such as a mobile phone, which is familiar to the user.

The number of hexadecimal numerical values, which constitute a multi-byte character code, does not necessary agree with the number of remote-control codes which are representative of the multi-byte character code.

FIG. 14 shows an example of a remote-control code conversion process of encoding four hexadecimal numerical values, which constitute a multi-byte character code, by using eight remote-control codes.

A multi-byte character code "0x3053" is composed of four hexadecimal numerical values ("0x3", "0x0", "0x5", "0x3"). The data length of each of the hexadecimal numerical values is four bits. In FIG. 14, each 4-bit data portion is divided into two 2-bit data portions. Each 2-bit data portion is converted to a remote-control code that is indicative of a numerical value of the 2-bit data portion. Specifically, the first hexadecimal numerical value "0x3" in the character code "0x3053" is divided into two 2-bit portions "00" and "11", and the 2-bit portion "00" is converted to a remote-control code "0x30" indicative of the value "0'", and the 2-bit portion "11" is converted to a remote-control code "0x33" indicative of the value "3". The second hexadecimal numerical value "0x0" in the character code "0x3053" is divided into two 2-bit portions "00" and "00", and the former 2-bit portion "00" is converted to a remote-control code "0x30" indicative of the value "0", and the latter 2-bit portion "00" is also converted to a remote-control code "0x30" indicative of the value "0". The third hexadecimal numerical value "0x5" in the character code "0x3053" is divided into two 2-bit portions "01" and "01", and the former 2-bit portion "01" is converted to a remote-control code "0x31" indicative of value "1", and the latter 2-bit portion "01" is also converted to a remote-control code "0x31" indicative of the value "1". The fourth hexadecimal numerical value "0x3" in the character code "0x3053" is divided into two 2-bit portions "00" and "11", and the 2-bit portion "00" is converted to a remote-control code "0x30" indicative of the value "0", and "11" is converted to a remote-control code "0x33" indicative of value "3".

It can be said that the remote-control code conversion process illustrated in FIG. 14 is a process of decomposing the data of the character code into a plurality of partial data, and converting each of the plural partial data to a remote-control code corresponding to the value indicated by the partial data.

In the present embodiment, the terminal apparatus 101 functioning as the transmission apparatus is realized by the mobile phone by way of example. The terminal apparatus 101, however, is not limited to the mobile phone, and may be realized by an arbitrary information terminal apparatus having a remote-control code transmission unit that is controllable by a program. In addition, in the present embodiment, the electronic apparatus 106 functioning as the reception apparatus is realized by the playback apparatus by way of example. The electronic apparatus 106, however, is not limited to the playback apparatus, and may be realized by an arbitrary apparatus in which a remote-control code that is received by the remote-control code reception unit can be processed by a program.

## Claims

1. A terminal apparatus (101) **characterized by** comprising:
an input unit (205) configured to input a character;
a remote-control code transmission unit (103) configured to transmit a remote-control code to an electronic apparatus (106); and
a remote-control code conversion unit (301) configured to convert a multi-byte character code, which is composed of a plurality of numerical values and corresponds to the character that is input by the input unit (205), to a plurality of remote-control codes corresponding to the plurality of numerical values, and to successively output the plurality of remote-control codes to the remote-control code transmission unit (103), in order to transmit the multi-byte character code corresponding to the character input by the input unit (205) to the electronic apparatus (106) via the remote-control code transmission unit (103).

2. The terminal apparatus according to claim 1, **characterized in that** the remote-control code conversion unit (301) is configured to successively output the plurality of remote-control codes to the remote-control code transmission unit (103), after outputting to the remote-control code transmission unit (103) a control code indicative of start of a character input mode for transmitting the multi-byte character code by using remote-control codes.

3. The terminal apparatus according to claim 1, **characterized in that** the remote-control code conversion unit (301) is configured to decompose data of the multi-byte character code into a plurality of partial data and to convert each of the plurality of partial data to a remote-control code corresponding to a numerical value indicated by each of the plurality of partial data, thereby converting a plurality of numerical values, which constitute the multi-byte character code, to the plurality of remote-control codes.

4. The terminal apparatus according to claim 1, **characterized in that** the multi-byte character code is composed of a plurality of numerical values which are expressed by hexadecimal numbers, respectively, and
the remote-control code conversion unit (301) is configured to convert the plurality of numerical values, which are expressed by hexadecimal numbers, to a plurality of remote-control codes corresponding to the plurality of numerical values.

5. The terminal apparatus according to claim 1, **characterized by** further comprising:
a camera (206); and
a bar code analysis unit (303) configured to analyze a two-dimensional bar code, which is photographed by the camera (206), and to generate a multi-byte character code,
wherein the multi-byte character code, which is generated by the bar code analysis unit (303), is input to the remote-control code conversion unit (301).

6. An electronic apparatus (106) **characterized by** comprising:
a remote-control code reception unit (108) configured to receive a plurality of remote-control codes, which are successively transmitted from a terminal apparatus, the plurality of remote-control codes corresponding to a plurality of numerical values which constitute a multi-byte character code;
a remote-control code process unit (501) configured to execute a character code reconstruction process of reconstructing the multi-byte character code by combining a plurality of numerical values corresponding to the plurality of remote-control codes received by the remote-control code reception unit (108); and
a character process unit (502) configured to process, as a character, the multi-byte character code reconstructed by the remote-control code process unit (501).

7. The electronic apparatus according to claim 6, **characterized in that** the remote-control code process unit (501) is configured to determine whether a remote-control code, which is received by the remote-control code reception unit (108), is a control code indicative of start of a character input mode for transmitting the multi-byte character code by using remote-control codes, to execute, if the received remote-control code is the control code, the character code reconstruction process for remote-control codes which are transmitted following the control code, and to execute, if the received remote-control code is not the control code, a process which is assigned to the received remote-control code.

8. A multi-byte character code transmission system **characterized by** comprising:
a transmission apparatus (101) configured to be capable of transmitting a remote-control code, including:
a remote-control code conversion unit (301) configured to convert a multi-byte character code, which is composed of a plurality of numerical values, to a plurality of remote-control codes corresponding to the plurality of numerical values; and
a remote-control code transmission unit (103) configured to successively transmit to outside the plurality of remote-control codes which are output from the remote-control code conversion unit (301); and
a reception apparatus (106) configured to be capable of receiving a remote-control code, including:
a remote-control code reception unit (108) configured to receive the plurality of remote-control codes, which are transmitted from the transmission apparatus (101);
a remote-control code process unit (501) configured to execute a character code reconstruction process of reconstructing the multi-byte character code by combining a plurality of numerical values corresponding to the plurality of remote-control codes received by the remote-control code reception unit (108); and
a character process unit (502) configured to process, as a character, the multi-byte character code reconstructed by the remote-control code process unit (501).

9. The multi-byte character code transmission system according to claim 8, **characterized in that** the remote-control code process unit (501) is configured to determine whether a remote-control code, which is received by the remote-control code reception unit (108), is a control code indicative of start of a character input mode for transmitting the multi-byte character code by using remote-control codes, to execute, if the received remote-control code is the control code, the character code reconstruction process for remote-control codes which are transmitted following the control code, and to execute, if the received remote-control code is not the control code, a process which is assigned to the received remote-control code.

10. A multi-byte character code transmission method for transmitting a multi-byte character code from a transmission apparatus (101) to a reception apparatus (106), **characterized by** comprising:
converting a plurality of numerical values, which constitute a multi-byte character code, to a plurality of remote-control codes corresponding to the plurality of numerical values;
successively transmitting the plurality of remote-control codes from the transmission apparatus (101) to the reception apparatus (106);
executing a character code reconstruction process of reconstructing the multi-byte character code by combining a plurality of numerical values corresponding to the plurality of remote-control codes received by the reception apparatus (106); and
processing the reconstructed multi-byte character code as a character.

11. The multi-byte character code transmission method according to claim 10, **characterized in that** said converting includes decomposing data of the multi-byte character code into a plurality of partial data and converting each of the plurality of partial data to a remote-control code corresponding to a numerical value indicated by each of the plurality of partial data, thereby converting a plurality of numerical values, which constitute the multi-byte character code, to the plurality of remote-control codes.

12. The multi-byte character code transmission method according to claim 10, **characterized by** further comprising:
determining whether a remote-control code, which is received by the reception apparatus, is a control code indicative of start of a character input mode for transmitting the multi-byte character code by using remote-control codes; and
executing, if the received remote-control code is not the control code, a process which is assigned to the received remote-control code,
wherein if the received remote-control code is the control code, the character code reconstruction process is executed for remote-control codes which are transmitted following the control code.
